# EUROPEAN PATENT APPLICATION

(11) **EP 2 457 666 A1**
(43) Date of publication of application: **30.05.2012**
(21) Application number: 10192597.2
(22) Date of filing: 25.11.2010
(51) Int. Cl.: B05B 9/04, B05B 9/043, F16J 15/14

(54) **Spray painting device**

(71) Applicant: Galassi, Doriano, 48025 Borgo Rivola-Riolo Terme (IT)
(72) Inventor: Galassi, Doriano, 48025 Borgo Rivola-Riolo Terme (IT)
(74) Representative: Lanzoni, Luciano

(57) **Abstract**

A spray painting device comprising: a head (5) housing a compression or pumping chamber (6) for a predetermined quantity of paint; a compression unit (3), connected to the head (5) for conveying the paint from the compression or pumping chamber (6) to at least one paint supply duct (7); a paint suction and feed valve (12), connected inside a duct (11) made in the head (5) for distributing the paint in the pumping chamber (6); the duct (11) being in fluid communication with the pumping chamber (6); and a filler material (18) positioned in a cavity (17) formed between the suction and feed valve (12) and the duct (11). [Figure 4]

## Description

This invention relates to a spray painting device. In particular, this invention relates to an airless spray painting device, generally comprising diaphragm pump, or a piston pump, which sucks the paint from a container and compresses it in a pumping chamber.

Extending from the pumping chamber there are one or more ducts for feeding respective user devices, for example spray guns. In this way, the paint contained in the chamber is pumped at high pressure through the feed ducts to the spray guns.

In particular, the pumping chamber is partly formed by an elastic diaphragm, which is made to oscillate by a hydraulic or mechanical control between two limit configurations, one concave and one convex, which correspond to the steps of paint suction and compression.

The pumping chamber and the feed ducts are usually made in a painting head, which houses a paint suction or supply valve.

In more detail, the head has a threaded duct, in fluid communication with the pumping chamber. The valve is screwed into the duct. It is preferably a non-return valve, which also has a threaded outer surface.

In this way, the valve is connected to the head and positioned with a respective paint infeed zone outside the head, and with a respective paint outfeed zone giving onto the pumping chamber. Therefore, the paint is distributed through the valve into the pumping chamber, so that it can be forced by the action of the diaphragm or the piston towards the distribution duct.

However, the device described above has an important disadvantage.

It should be noticed that the paint in the pumping chamber tends to infiltrate the cavities between the threaded duct and the valve.

The high pressures in the pumping chamber cause the liquid paint to infiltrate along the threaded surfaces, becoming encrusted and damaging the threads.

Consequently, the paint deposited between the head valve and duct solidifies, preventing unscrewing and removal of the valve from the head.

To overcome this disadvantage, threaded surfaces with minimum play are made, to eliminate any cavities or passages between the valve and the head.

However, even this solution has an important disadvantage, mainly on account of valve and head deformation due to the thermal effects in the pumping chamber.

Owing to the high pressures of the paint in the pumping chamber, the temperature of the head and the valve is raised, which tends to cause the head to expand unevenly relative to the valve. Consequently, that expansion may damage the threaded surfaces and cause the formation of cracks in the structure of the valve or the head.

In this context, the technical purpose which forms the basis of this invention is to propose a spray painting device which overcomes the above mentioned disadvantages of the prior art.

In particular, the aim of this invention is to provide a spray painting device able to prevent the passage of paint in the cavities formed between the threaded surfaces of the valve and the head. Another aim of this invention is to provide a spray painting device which is simple and structurally reliable, which will not deteriorate after any thermal expansion or improper use by operators.

The technical purpose indicated and the aims specified are substantially achieved by a spray painting device comprising the technical features described in one or more of the appended claims.

Further features and advantages of the invention are more apparent in the non-limiting description which follows of a preferred embodiment of a spray painting device as illustrated in the accompanying drawings, in which:
- Figure 1 is a perspective view of a spray painting device in accordance with the invention;
- Figure 2 is a perspective view of a construction detail of the device of Figure 1;
- Figure 3 is a perspective, exploded view of the construction detail of Figure 2;
- Figure 4 is a cross-section along the line IV - IV in the construction detail of Figure 2; and
- Figure 5 is a cross-section along the line V - V in the construction detail of Figure 2.

With reference to the accompanying drawings, the numeral 1 denotes a spray painting device according to this invention.

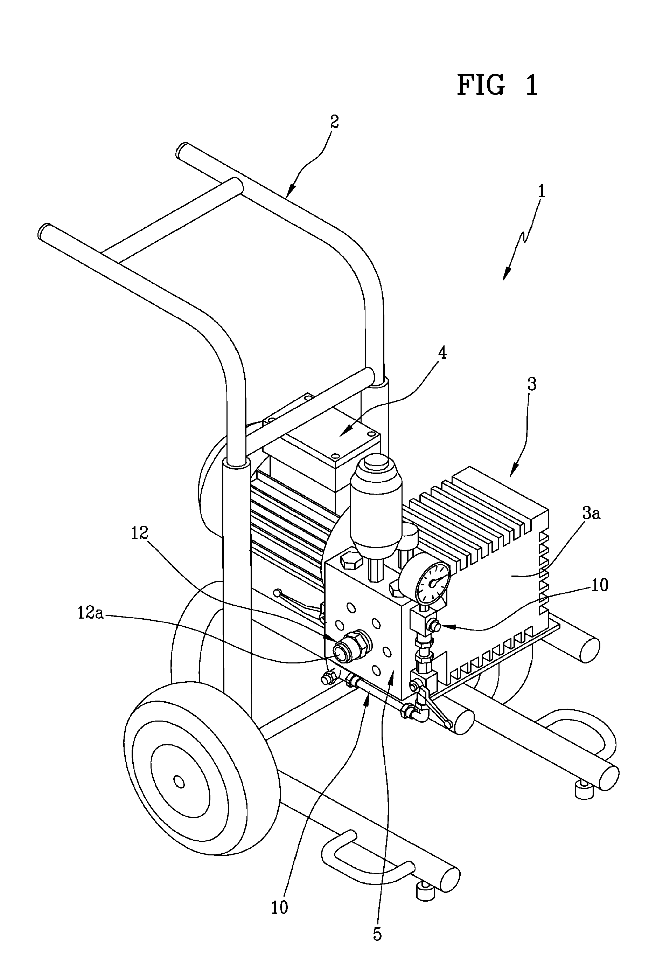

As shown in Figure 1, the device 1 comprises a trolley 2, which is only schematically illustrated, on which a compression and suction unit 3, preferably consisting of a diaphragm pump 3a, and a motor 4 for driving the diaphragm pump 3a are mounted. The motor 4, which is of the known type and therefore not described and illustrated in detail, is preferably an electric motor.

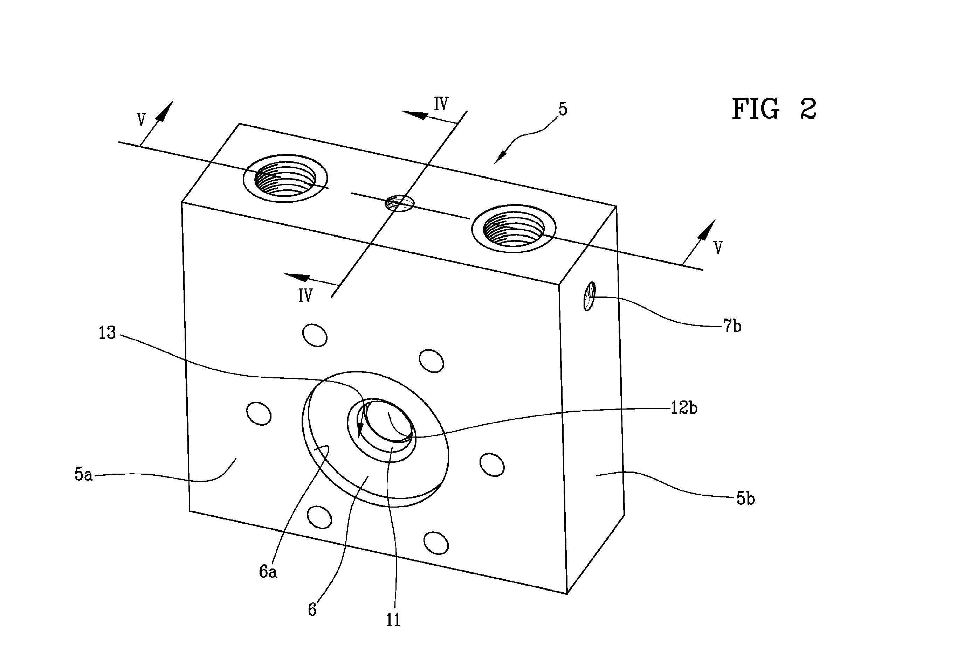

The compression unit 3 is connected to a head 5 which is substantially in the shape of a parallelepiped, its inside comprising a pumping or compression chamber 6 (Figure 2) for a predetermined quantity of paint.

Advantageously, the compression unit 3 comprises an actuator, of the known type and therefore not illustrated and described in detail. The actuator is able to move towards/away from the chamber 6 to pump the paint into a supply duct 7 made in the head 5.

The actuator preferably comprises a diaphragm, connected to the pumping chamber 6, and a mobile element, such as a cam, which is driven by the motor 4 and designed to deform the diaphragm so as to vary the volume of the chamber.

The diaphragm is configured alternately in two limit positions, one concave and one convex, which correspond to the steps of paint suction into the chamber 6 and, respectively, paint compression towards the supply duct 7.

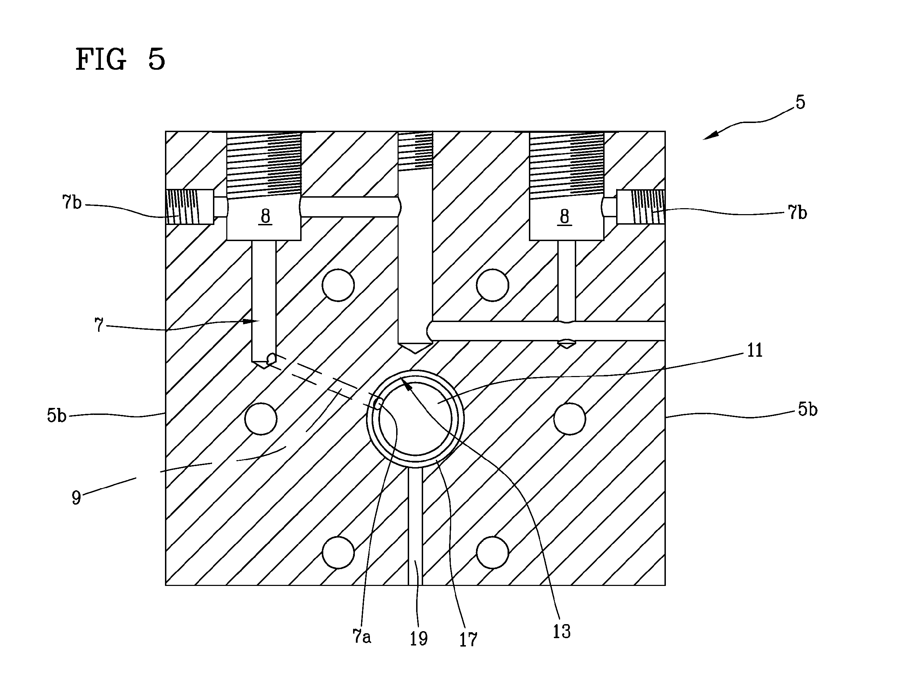

Figure 2 shows the head 5 without the diaphragm to better illustrate the respective pumping chamber 6. It should be noticed that the pumping chamber 6 is made in a surface 5a designed to make contact with the compression unit 3, and preferably has a circular shape formed by an annular lateral wall 6a. In the lateral wall 6a there is an infeed hole 7a of the supply duct 7, extending inside the head 5. As shown in the cross-section in Figure 5, the supply duct 7 comprises at least one outfeed branch 8 (Figure 5 shows two) both connected to an infeed branch 9 in fluid communication with the infeed hole 7a.

The duct 7 also comprises an outfeed hole 7b made in the lateral surface 5b of the head 5 and in fluid communication with both of the outfeed branches 8.

The paint compressed in the pumping chamber 6 is therefore directed through the infeed hole 7a into the infeed branch 9 so that it flows into the outfeed branches 8. Therefore the paint is made to come out of the outfeed holes 7b which can be connected to a distributor unit 10 designed to supply the paint in spray form, using suitable channels which are not illustrated since they are not part of this invention.

The head 5 also comprises a duct 11 housing a paint feed valve 12.

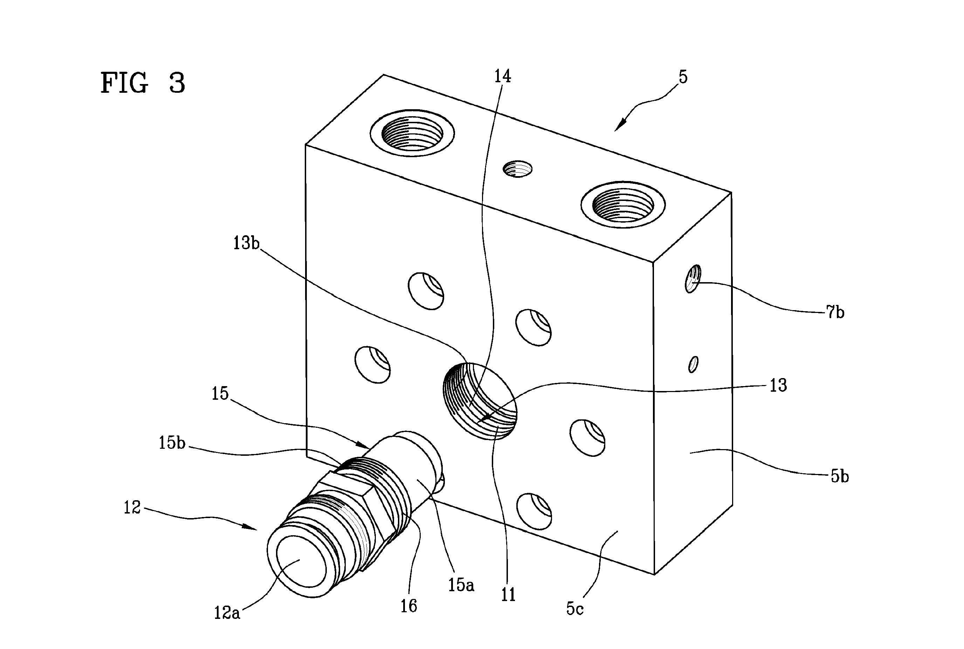

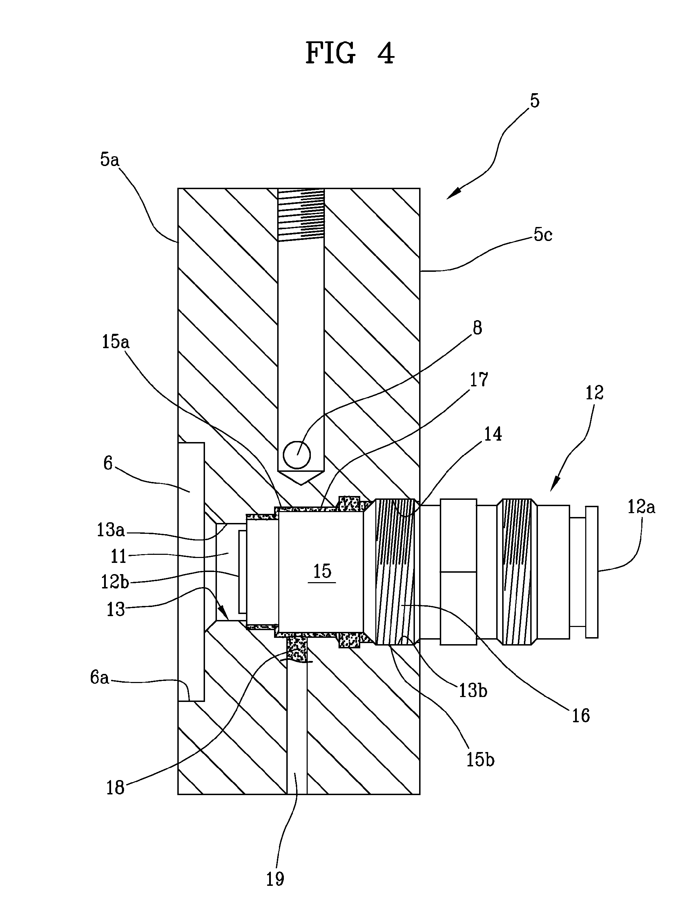

As illustrated in the cross-sections in Figures 4 and 5, the duct 11 has a circular cross-section and is in fluid communication with the pumping chamber 6. It should also be noticed that the duct 11 is formed by an annular inner surface 13 with a first end 13a at the pumping chamber 6. The inner surface 13 also comprises a second end 13b, opposite to the first end 13a, equipped with a thread 14 and positioned at an outer surface 5c of the head 5 which is opposite to the contact surface 5a (Figure 3).

In particular with reference to Figure 3, it should be noticed that the paint suction and feed valve 12, is preferably a non-return valve and is connected in the duct 11 for distributing the paint in the chamber 6.

In particular, the valve 12 has a first end 12a, projecting from the outer surface 5c (Figure 1) outside the duct 11, for connection to a paint feed source of the known type which is not illustrated. On the side opposite to the first end 12a a second end 12b extends, positioned at the pumping chamber 6 and by which the paint is compressed and supplied. The valve 12 also has a cylindrical outer surface 15 with a first end 15a facing the first end 13a of the inner surface 13, and a second end 15b, opposite to the first end 15a, which is equipped with a thread 16.

In this way, the valve 12 is screwed into the duct 11 to couple the thread 14 of the annular inner surface 13 with the thread 16 of the cylindrical outer surface 15.

As Figures 4 and 5 show more clearly, extending between the valve 12 and the duct 11 there is a cavity 17, having a substantially tubular shape and formed at the pumping chamber 6.

In more detail, the cavity 17 is formed between the first end 15a of the cylindrical outer surface 15 of the valve 12, and the first end 13a of the annular inner surface 13 of the duct 11.

The cavity 17 houses a filler material 18, preferably impermeable to prevent the passage of paint from the pumping chamber into the duct 11.

In particular, the filler material 18 is in a semi-solid state, preferably having a pasty structure, so that it can easily be distributed in the cavity 17. Advantageously, the material 18 consists of a lubricating grease, of the known type and therefore not described in detail, which is fed into the cavity 17 through a flow channel 19 made in the head 5 (Figures 4 and 5).

In this way, the entire cavity 17 is filled with the material 18, keeping the valve 12 and the duct 11 suitably spaced.

Advantageously, the duct 11 is rendered impermeable at the access zone to the pumping chamber 6, to prevent any paint leaks into the duct 11. The filler material 18 prevents the paint pumped into the chamber 6 from infiltrating at the valve 12, keeping the valve and the respective threads 14, 16 clean and unspoilt.

Moreover, the presence of the cavity 17 allows thermal expansion of the valve 12 and the head 5. In this way, the head 5 and the valve 12 can be subjected to thermal expansion without damaging the mechanical parts affected by the increase in temperature.

It should also be noticed that the flow channel 19 allows adjustment of any excess quantity of filler material 18 in the cavity 17 if the size of the cavity 17 is modified following the above-mentioned expansion.

## Claims

1. A spray painting device comprising:
- a head (5) housing a pumping chamber (6) for a predetermined quantity of paint;
- a compression and suction unit (3), connected to the head (5) for conveying the paint from the pumping or compression chamber (6) to at least one paint supply duct (7); and
- a paint suction and feed valve (12), connected inside a duct (11) made in the head (5) for distributing the paint in the pumping chamber (6); the duct (11) being in fluid communication with the pumping chamber (6), **characterised in that** it also comprises a filler material (18) positioned in a cavity (17) formed between the feed valve (12) and the duct (11).

2. The device according to the preceding claim, **characterised in that** the filler material (18) is impermeable, preventing the passage of paint from the pumping chamber (6) into the duct (11).

3. The device according to either of the foregoing claims, **characterised in that** the filler material (18) is semi-solid, having a pasty structure.

4. The device according to any of the foregoing claims, **characterised in that** the cavity (17) is in fluid communication with the pumping chamber (6) and has a substantially tubular shape; the cavity (17) being formed between a first end (15a) of a cylindrical outer surface (15) of the valve (12) and a first end (13a) of an annular inner surface (13) of the duct (11).

5. The device according to the preceding claim, **characterised in that** the cylindrical outer surface (15) has a second, threaded end (15b), operatively screwed onto a second, threaded end (13b) of the annular inner surface (13) of the duct (11); the second ends (13b, 15b) of the cylindrical outer surface (15) and of the annular inner surface (13) being the ends furthest from the pumping chamber (6).

6. The device according to any of the foregoing claims, **characterised in that** the head (5) also comprises a flow channel (19) for the filler material (18), in fluid communication with the cavity (17), for varying the quantity of filler material (18) according to the thickness of the cavity (17).

7. The device according to any of the foregoing claims, **characterised in that** the valve (12) is a non-return valve and has a first end (12a), positioned outside the duct (11) and able to connect to a paint feed source, and a second end (12b) opposite to the first end (12a), this second end being positioned at the pumping chamber (6).

8. The device according to any of the foregoing claims, **characterised in that** the paint supply duct (7) has an infeed hole (7a) made in the pumping chamber (6) and two outfeed holes (7b) made in an outer surface (5b) of the head (5); the outfeed holes (7b) being able to connect to a paint distributor unit (10).

9. The device according to the preceding claim, **characterised in that** the compression unit (3) comprises: an actuator able to move in the chamber (6) for pumping the paint into the infeed hole (7a) of the supply duct (7); and a motor (4) connected to the actuator for moving the actuator alternately towards/away from the chamber (6).

10. The device according to any of the foregoing claims, **characterised in that** the compression unit (3) comprises a diaphragm pump (3a).
